# EUROPEAN PATENT SPECIFICATION

(11) **EP 2 899 433 B1**
(45) Date of publication and mention of the grant of the patent: **23.11.2016**
(21) Application number: 15151905.5
(22) Date of filing: 21.01.2015
(51) Int. Cl.: F16J 3/04, B23K 26/12, B23Q 11/08

(54) **Protective bellows and protection method for machine tool with laser processing device**
Schutzbalg und Schutzverfahren für Werkzeugmaschine mit Laserbearbeitungsvorrichtung
Soufflet de protection et procédé de protection pour machine-outil avec un dispositif de traitement laser

(30) Priority: 28.01.2014 IT BO20140032
(43) Date of publication of application: 29.07.2015
(73) Proprietor: P.E.I. Protezioni Elaborazioni Industriali S.r.l., 40012 Calderara di Reno (Bologna) (IT)
(72) Inventor: Benedetti, Michele, 40132 BOLOGNA (IT); Maccaferri, Fabio, 40010 SALA BOLOGNESE (BOLOGNA) (IT)
(74) Representative: Milli, Simone

(56) References cited:
- EP-A1- 2 039 966
- DE-A1-102006 037 918
- DE-U1-202004 005 303

## Description

This invention relates to a protective bellows and to a protection method for machines tools, in particular for machine tools equipped with laser processing devices.

In the technical sector concerned, that is to say, mechanical processing, a plurality of protective bellows are known which are internally equipped with a plurality of metallic diaphragms preventing damage to the bellows caused by laser beams impacting the polymeric material the bellows is made of.

These protective bellows must not only guarantee dependability over time but they must also be very easy to make.

Patent documents DE10137803B4 in the name of TRUMPF, EP1887263B1 in the name of ARNO and MI2007A001717 in the name of MOLLER describe and illustrate different protective bellows for machine tools. Furthermore DE 10 2006 037 918 A1 discloses a protective bellows for machine tools equipped with laser processing devices.

It should, however, be noted that protective bellows for machine tools are constructionally very complicated and difficult to adapt to dimensional changes.

Indeed, some of the above-mentioned protective bellows are made by moulding: that means specific moulds must be made every time the size of the bellows must be changed, which in turn means increased costs and lengthier production times.

A need which is strongly felt by manufacturers is therefore that for a protective bellows which meets the requirements of application on machine tools (in terms of durability, dependability and protection of the bellows material) and which is at the same time simple to make. This invention therefore has for an aim to meet the above-mentioned need.

More specifically, the aim of this invention is to provide a protective bellows and a protection method for machine tools equipped with laser tools.

According to the invention, this aim is achieved by a protective bellows and a protection method forming the object of the invention, comprising the technical features set out in one or more of the annexed claims.

The technical features of the invention, with reference to the above aims, are clearly described in the annexed claims and its advantages are more apparent from the detailed description which follows, with reference to the accompanying drawings which illustrate a non-limiting embodiment of the invention and in which:
- Figure 1 shows a perspective view of a first embodiment of a protective bellows according to the invention;

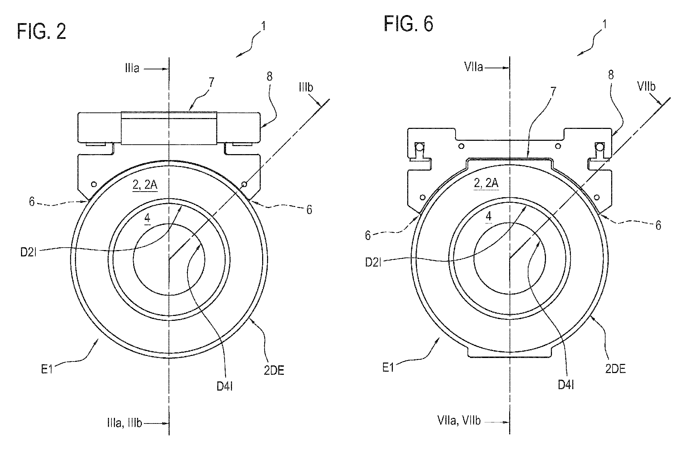

- Figure 2 shows a front view of the bellows of Figure 1;

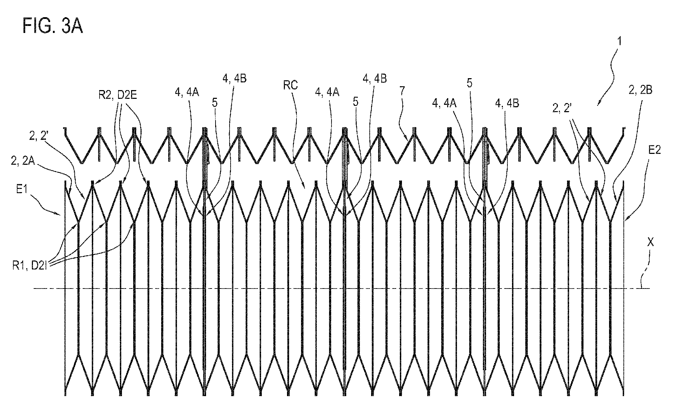

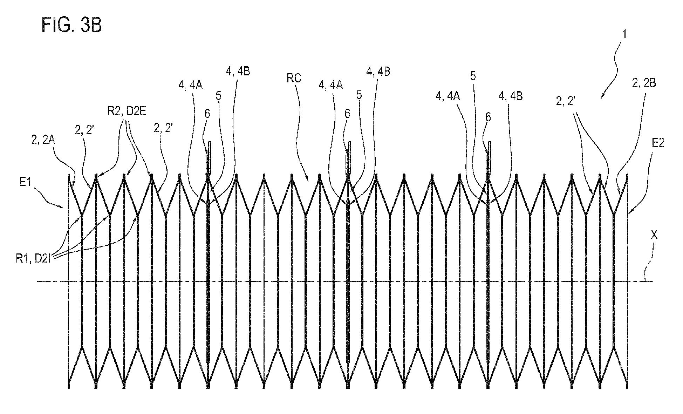

- Figures 3A and 3B show respective longitudinal cross sections, along the cross-sectional planes IIIa-IIIa and IIIb-IIIb, of the bellows of Figure 1;

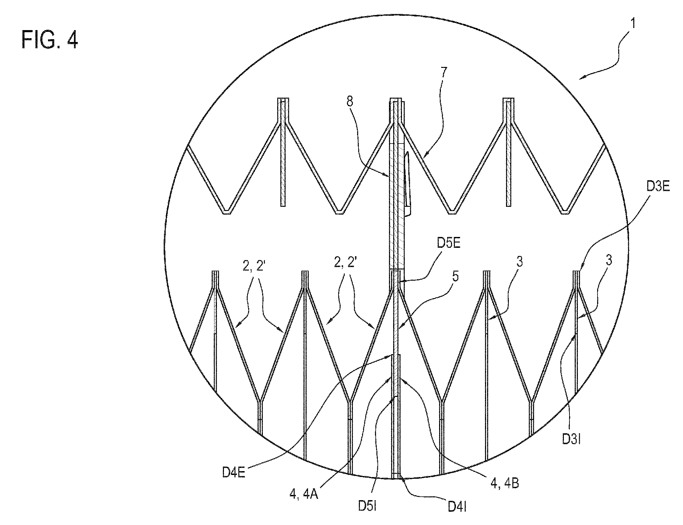

- Figure 4 shows an enlarged detail of the bellows of Figure 1;
- Figure 5 shows a perspective view of a second embodiment of a protective bellows according to the invention;
- Figure 6 shows a front view of the bellows of Figure 5;

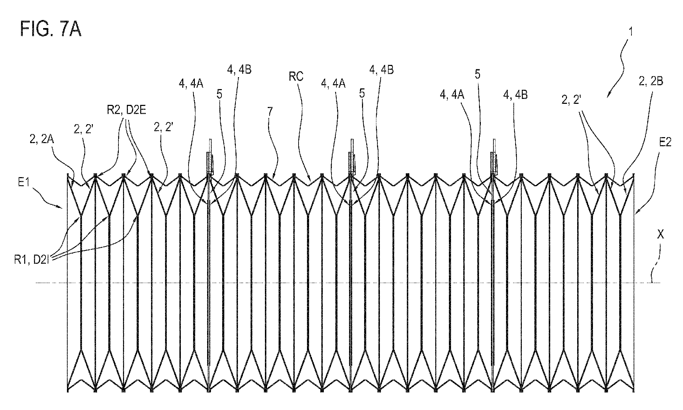

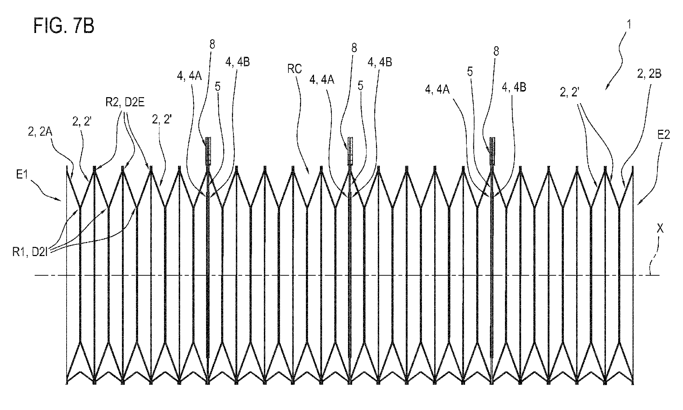

- Figures 7A and 7B show respective longitudinal cross sections, along the cross-sectional planes VIIa-VIIa and VIIb-VIIb, of the bellows of Figure 5;

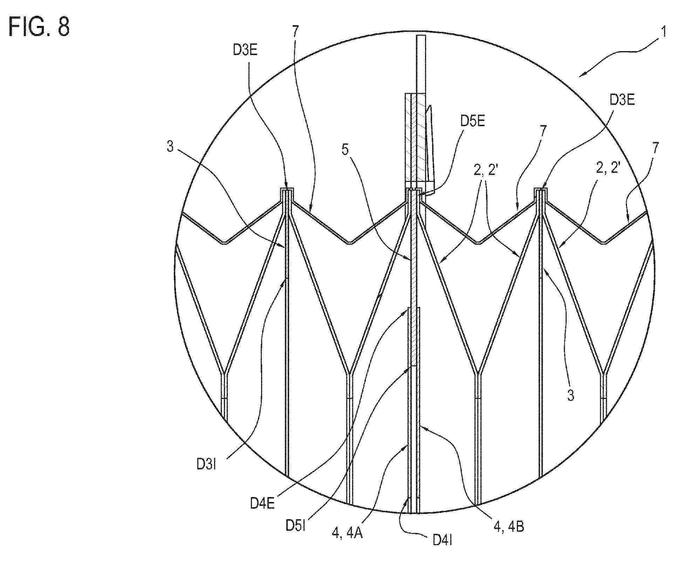

- Figure 8 shows an enlarged detail of the bellows of Figure 5;

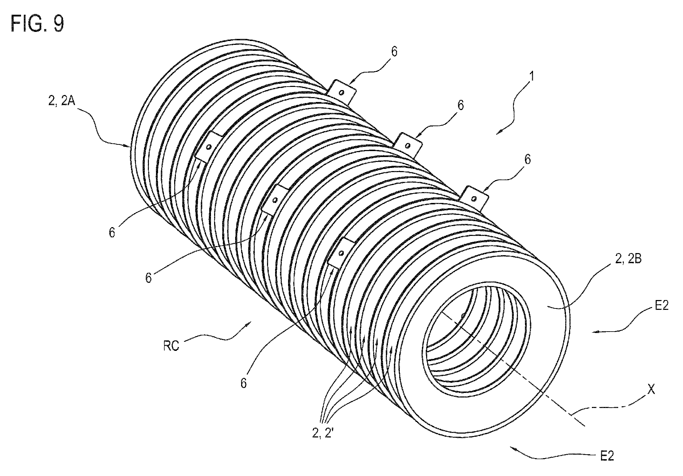

- Figure 9 shows an enlarged detail of the bellows of Figures 1 and 5, with some parts cut away in order to better illustrate others.

With reference to the accompanying drawings, the numeral 1 denotes a protective bellows for machine tools, in particular machine tools equipped with laser tools.

It should be noted that the bellows 1 is a bellows with circular cross section. More precisely, the bellows 1 defines a substantially cylindrical internal region.

The protective bellows 1 comprises a plurality of flexible annular elements 2 made of polymeric material and each having an inner edge D2I and an outer edge D2E.

The flexible annular elements 2 are connected, in use, in succession along a direction X of extension of the bellows 1.

It should be noted that the term "annular elements" is used to mean elements, including elements of non-circular geometry, defining a plane surface between the inner edge and the outer edge. Preferably, the flexible annular elements 2 have a circular shape, that is to say, they are disc shaped.

In other embodiments not illustrated, the flexible annular elements 2 have the shape of a regular polygon which can be circumscribed in a circle (pentagon, hexagon, dodecagon, etc.).

One of the flexible annular elements 2A defines a first end E1 of the bellows, whilst another of the annular elements 2B defines a second end E2 of the bellows and the remaining flexible annular elements 2' define a central region RC between the ends (E1, E2).

It should be noted that each of the flexible annular elements is connected, more preferably sealed (thermosealed), to another flexible annular element adjacent thereto in a first sealing region R1 close to the inner edge D2I in such a way that each of the annular elements 2 and another flexible annular element are connected together close to their inner edges D2I.

The bellows 1 also comprises at least one stiffening element 3, having an inner edge D3I and an outer edge D3E, interposed between a pair of flexible annular elements 2 of the central region RC in such a way that the flexible annular elements of the pair are connected, more preferably sealed (thermosealed) to the stiffening element 3 at a second sealing region (R2) close to their outer edges D2E.

Preferably, the stiffening element 3 is annular.

Preferably, the outer edge D3E and the inner edge D3I of the stiffening element 3 define respective circles.

The bellows 1 also comprises at least one diaphragm 4 having an inner edge D4I and an outer edge D4E.

The diaphragm 4 is made preferably of metallic material.

It should be noted that the purpose of the diaphragm 4 is to intercept the laser beams of the laser device so that the flexible elements 2 are not struck by the laser beams (which would damage the flexible elements 2).

The stiffening element 3 allows reducing misalignment between the diaphragms 4.

The bellows 1 comprises at least one supporting element 5 for supporting the diaphragm 4, having an inner edge D5I and an outer edge D5E, interposed between a pair of flexible annular elements of the central region RC in such a way that the flexible annular elements of the pair are sealed on the supporting element at a second sealing region close to their outer edges D2E.

It should also be noted that the supporting element 5 has at least one protrusion 6 defining, in use, a fixing surface and configured for protruding, in use, beyond the outer edges D2E of the flexible annular elements 2 (that is, to protrude into the outer region defined by the flexible annular elements 2).

It should be noted that the element 5 preferably has the shape of a disc.

Preferably, the outer edge D5E and the inner edge D5I of the element 5 define respective circles.

The diaphragm 4 is connected (rigidly fixed), in use, to the supporting element 5 to be carried by the supporting element 5.

It should be noted that the diaphragm 4 is preferably connected (rigidly fixed), in use, to the supporting element 5 in a central region between the inner edge D4I and the outer edge D4E of the diaphragm itself.

It should also be noted that, in use, the diaphragm 4 is inserted in the internal region defined by the flexible annular elements 2, that is, inside the bellows 1.

In the preferred embodiment illustrated in the accompanying drawings, the bellows 1 comprises a first diaphragm 4A and a second diaphragm 4B, connected to the same supporting element 5 on opposite sides of it relative to the direction X of extension of the bellows.

In the embodiment illustrated, the supporting element 5 has a pair of protrusions 6 defining, in use, a fixing surface and configured for protruding, in use, beyond the outer edges D2E of the flexible annular elements 2 (that is, to protrude into the outer region defined by the flexible annular elements 2).

According to another aspect, the bellows 1 comprises an outer stiffening element 7 having a plurality of peaks and troughs along the longitudinal direction X of extension of the bellows.

Preferably, the outer stiffening element 7 has the shape of a flat bellows, that is, it has a plurality of leaves (which define the aforementioned peaks and troughs) extending between an extended configuration and a closed configuration along the longitudinal direction X of extension of the bellows 1.

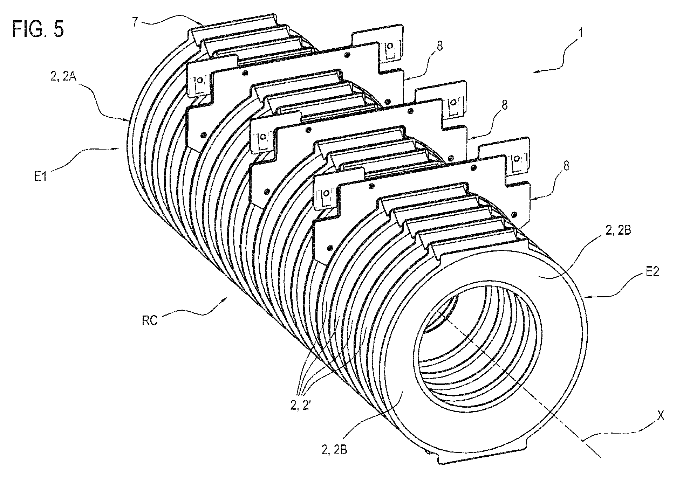

In the embodiment illustrated in Figure 5, the outer element 7 is, in use, fixed to the flexible annular elements 2 at an outer region close to the outer edge D2E of the flexible annular elements 2.

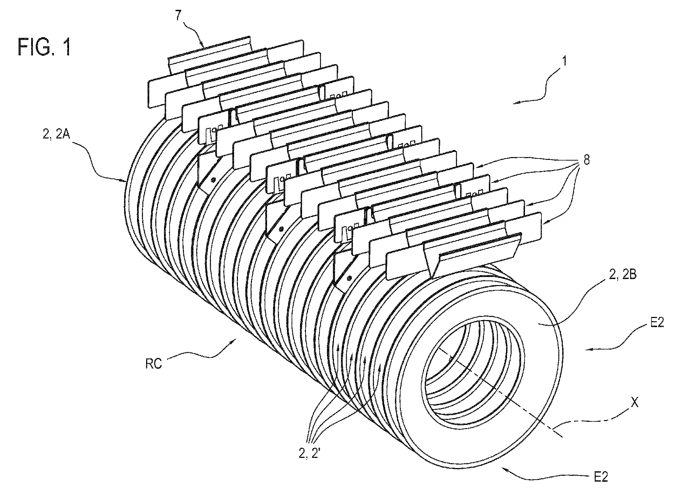

In the embodiment illustrated in Figure 1, on the other hand, the bellows 1 comprises a guide element 8 (preferably a plurality of guide elements 8) fixed to the at least one protrusion 6, and further comprises an outer stiffening element 7, having a plurality of peaks and troughs, fixed in use to the at least one guide element 8.

In an embodiment not illustrated, the outer element 7 is, in use, fixed directly to at least one pair of protrusions 6.

Preferably, the outer stiffening element 7 is a continuous flexible element (fabric) having crests which define the aforementioned peaks and troughs.

It should be noted that, preferably, the supporting element 5 has a thickness which is greater than that of the stiffening element 3. Preferably, both the supporting element 5 and the stiffening element 3 are made of polymeric material.

Also defined according to the invention is a mechanical processing machine, comprising an operating head equipped with a laser tool and a protective bellows 1 (as described above), associated with the laser tool.

Use of the bellows 1 is described briefly below.

The bellows 1 provides protection against the laser beam emitted by the laser tool of the operating machine. In other words, the laser beam passes through the region (cylindrical) inside the bellows itself. The rays inclined at an unwanted angle, which would strike the inside of the flexible annular elements 2, are intercepted by the diaphragm 4.

The protrusion/s 4 is/are fixed to movable parts of the machine, which allow modifying the configuration of the bellows, that is, moving the flexible elements 2 between a fully extended, end configuration of the bellows and a closed, end configuration of the bellows 1 (where the surfaces of the flexible elements 2 are substantially parallel to each other).

With reference to the advantages of the invention, it should be stressed that the bellows 1 is easy to make at limited costs.

That means it is economical for the manufacturer to make even very limited batches: in effect, there is no need to have a specific mould for each size of bellows in the product range.

Moreover, the bellows 1 according to the invention is particularly reliable and durable.

It should be noted that the outer stiffening element 7 prevents the bellows 1 from being extended beyond a predetermined limit.

In effect, the stiffening element 7 limits the extension of the bellows 1 to prevent damage to the bellows 1, in particular at the sealing region between the flexible annular elements 2, which would impair the sealing function of the bellows 1.

Moreover, the stiffening element 3 prevents the seals between the flexible annular elements 2 from yielding when the bellows is extended: in effect, the stiffening element 3 acts as a reinforcement which strengthens the bellows 1.

Also defined according to the invention is a method for making a protective bellows.

The method comprises the following steps:
- preparing a plurality of flexible annular elements 2 (made of polymeric material) having an inner edge D2I and an outer edge D2E
- connecting in succession along a direction X of extension of the bellows the flexible annular elements 2, one of the flexible annular elements 2 defining a first end E1 of the bellows, another of the annular elements defining a second end E2 of the bellows and the rest defining a central region RC between the ends E1, E2, the step of connecting in succession the flexible annular elements 2 comprising the steps of:
- sealing each of the annular elements to another flexible annular element at a first sealing region R1 close to the inner edge D2I in such a way that each of the annular elements and another flexible annular element are connected together close to their inner edges D2I,
- preparing at least one stiffening element 3 having an inner edge D3I and an outer edge D3E,
- placing the at least one stiffening element 3 between a pair of flexible annular elements 2 of the central region RC and sealing the flexible annular elements of the pair on the stiffening element 3 at a second sealing region R2 close to their outer edges D2E,
- preparing at least one diaphragm 4 having an inner edge D4I and an outer edge D4E,
- preparing at least one element 5 for supporting the diaphragm 4 having an inner edge D5I and an outer edge D5E equipped with at least one protrusion 6 defining, in use, a fixing surface and configured for protruding, in use, beyond the outer edges D2E of the flexible annular elements 2,
- placing the at least one supporting element 5 between a pair of flexible annular elements 2 of the central region RC and sealing the flexible annular elements 2 of the pair on the supporting element 5 at a second sealing region R2 close to the outer edges D2E of the flexible annular elements 2,
- connecting the diaphragm 4 to the supporting element 5.

## Claims

1. A protective bellows (1), comprising, in combination:
- a plurality of flexible annular elements (2) made of polymeric material having an inner edge (D2I) and an outer edge (D2E) and connected, in use, in succession along a direction (X) of extension of the bellows, one of the flexible annular elements (2A) defining a first end (E1) of the bellows, another (2B) of the annular elements defining a second end (E2) of the bellows and the remaining (2') flexible annular elements defining a central region (RC) between the ends (E1, E2), each of the flexible annular elements being sealed to another flexible annular element adjacent to it in a first sealing region (R1) close to the inner edge (D2I) in such a way that each of the annular elements and another flexible annular element are connected together close to their inner edges (D2I),
- at least one diaphragm (4) having an inner edge (D4I) and an outer edge (D4E),
- at least one supporting element (5) for supporting the diaphragm (4) having an inner edge (D5I) and an outer edge (D5E), interposed between a pair of flexible annular elements of the central region (RC), the diaphragm (4) being connected, in use, to the supporting element (5) for being carried by the supporting element (5),
the protective bellows being **characterised in that** it further comprises:
- at least one stiffening element (3), having an inner edge (D3I) and an outer edge (D3E), interposed between a pair of flexible annular elements (2) of the central region (RC) in such a way that the flexible annular elements of the pair are sealed on the stiffening element (3) at a second sealing region (R2) close to their outer edges (D2E); and **in that**
- the at least one supporting element (5) is interposed between the pair of flexible elements of the central region (RC) in such a way that the flexible annular elements of the pair are sealed on the supporting element at a second sealing region close to their outer edges (D2E), the supporting element (5) being equipped with at least one protrusion (6) defining, in use, a fixing surface and configured for protruding, in use, beyond the outer edges (D2E) of the flexible annular elements (2).

2. The protective bellows according to the preceding claim, comprising a first diaphragm (4A) and a second diaphragm (4B), connected to the same supporting element (5) on opposite sides of it relative to the direction (X) of extension of the bellows.

3. The protective bellows according to either of the preceding claims, wherein the supporting element (5) is equipped with a pair of protrusions (6) defining, in use, a fixing surface and configured for protruding, in use, beyond the outer edges (D2E) of the flexible annular elements (2).

4. The protective bellows according to any one of the preceding claims, further comprising an outer stiffening element (7), having a plurality of peaks and troughs, fixed in use to the flexible annular elements (2) at an outer region close to the outer edges (D2E).

5. The protective bellows according to any one of claims 1 to 3, further comprising an outer stiffening element (7), having a plurality of peaks and troughs, fixed in use to at least one pair of protrusions (6).

6. The protective bellows according to any one of claims 1 to 3, comprising at least one guide element (8), fixed to the at least one protrusion (6), and further comprising an outer stiffening element (7), having a plurality of peaks and troughs, fixed in use to the above-mentioned at least one guide element (8).

7. The protective bellows according to any one of claims 4 to 6, wherein the outer stiffening element (7) is a continuous fabric.

8. The protective bellows according to any one of the preceding claims, wherein the supporting element (5) has a thickness greater than that of the stiffening element (3).

9. A mechanical processing machine, comprising an operating head equipped with a laser tool and a protective bellows (1) according to any one of the preceding claims, associated with the laser tool.

10. A method of making a protective bellows, comprising the steps of:
- preparing a plurality of flexible annular elements (2) made of polymeric material having an inner edge (D2I) and an outer edge (D2E),
- connecting in succession along a direction (X) of extension of the bellows the flexible annular elements (2), one of the flexible annular elements (2) defining a first end (E1) of the bellows, another of the annular elements defining a second end (E2) of the bellows and the rest defining a central region (RC) between the ends (E1, E2), the step of connecting in succession the flexible annular elements (2) comprising the steps of:
- sealing each of the annular elements to another flexible annular element at a first sealing region (R1) close to the inner edge (D2I) in such a way that each of the annular elements and another flexible annular element are connected together close to their inner edges (D2I),
- preparing at least one stiffening element (3) having an inner edge (D3I) and an outer edge (D3E),
- placing the at least one stiffening element (3) between a pair of flexible annular elements (2) of the central region (RC) and sealing the flexible annular elements of the pair on the stiffening element (3) at a second sealing region (R2) close to their outer edges (D2E),
- preparing at least one diaphragm (4) having an inner edge (D4I) and an outer edge (D4E),
- preparing at least one element (5) for supporting the diaphragm (4) having an inner edge (D5I) and an outer edge (D5E) equipped with at least one protrusion (6) defining, in use, a fixing surface and configured for protruding, in use, beyond the outer edges (D2E) of the flexible annular elements (2),
- placing the at least one supporting element (5) between a pair of flexible annular elements (2) of the central region (RC) and sealing the flexible annular elements (2) of the pair on the supporting element (5) at a second sealing region (R2) close to the outer edges (D2E) of the flexible annular elements (2),
- connecting the diaphragm (4) to the supporting element (5).

## Patentansprüche

1. Schutzbalg (1), umfassend in Kombination:
- eine Vielzahl an flexiblen Ringelementen (2), bestehend aus Polymermaterial, aufweisend eine Innenkante (D2I) und eine Außenkante (D2E) und in Verwendung nacheinander entlang einer Ausdehnungsrichtung (X) des Balgs verbunden, wobei eins der flexiblen Ringelemente (2A) ein erstes Ende (E1) des Balgs definiert, ein anderes (2B) der Ringelemente ein zweites Ende (E2) des Balgs definiert und die verbleibenden (2') flexiblen Ringelemente eine mittige Region (RC) zwischen den Enden (E1, E2) definieren, wobei ein jedes der flexiblen Ringelemente an einem anderen flexiblen Ringelement, das daran angrenzt, in einer ersten Siegelregion (R1) gesiegelt ist, die nah an der Innenkante (D2I) angeordnet ist, sodass ein jedes der Ringelelemente und ein anderes flexibles Ringelement miteinander nah an deren Innenkanten (D2I) verbunden sind;
- mindestens eine Membran (4), aufweisend eine Innenkante (D4I) und eine Außenkante (D4E);
- mindestens ein Halterungselement (5) zur Halterung der Membran (4), aufweisend eine Innenkante (D5I) und eine Außenkante (D5E), eingesetzt zwischen einem Paar flexibler Ringelemente der mittigen Region (RC), wobei die Membran (4) in Verwendung mit dem Halterungselement (5) verbunden ist, um von dem Halterungselement (5) getragen zu werden, wobei der Schutzbalg **dadurch gekennzeichnet ist, dass** er zudem umfasst:
- mindestens ein Versteifungselement (3), aufweisend eine Innenkante (D3I) und eine Außenkante (D3E), eingesetzt zwischen einem Paar flexibler Ringelemente (2) der mittigen Region (RC), sodass die flexiblen Ringelemente des Paars am Versteifungselement (3) an einer zweiten Siegelregion (R2) in der Nähe deren Außenkanten (D2E) gesiegelt sind, und dadurch, dass
- das mindestens eine Halterungselement (5) zwischen dem Paar flexibler Elemente der mittigen Region (RC) so eingesetzt ist, dass die flexiblen Ringelemente des Paars am Halterungselement an einer zweiten Siegelregion in der Nähe deren Außenkanten (D2E) gesiegelt sind, wobei das Halterungselement (5) mit mindestens einem Vorsprung (6) versehen ist, der in Verwendung eine Befestigungsoberfläche definiert und ausgelegt ist, um in Verwendung jenseits der Außenkanten (D2E) der flexiblen Ringelemente (2) hervorzustehen.

2. Schutzbalg nach dem vorhergehenden Anspruch, umfassend eine erste Membran (4A) und eine zweite Membran (4B), verbunden mit demselben Halterungselement (5) an dessen gegenständig angeordneten Seiten relativ zur Ausdehnungsrichtung (X) des Balgs.

3. Schutzbalg nach einem der vorhergehenden Ansprüche, wobei das Halterungselement (5) mit einem Paar Vorsprünge (6) versehen ist, die in Verwendung eine Befestigungsoberfläche definieren und ausgelegt sind, um in Verwendung jenseits der Außenkanten (D2E) der flexiblen Ringelemente (2) hervorzustehen.

4. Schutzbalg nach einem der vorhergehenden Ansprüche, zudem umfassend ein äußeres Versteifungselement (7), aufweisend eine Vielzahl an Spitzen und Durchführungen, in Verwendung befestigt an den flexiblen Ringelementen (2) an einer äußeren Region in der Nähe der Außenkanten (D2E).

5. Schutzbalg nach einem der Ansprüche 1 bis 3, zudem umfassend ein äußeres Versteifungselement (7), aufweisend eine Vielzahl an Spitzen und Durchführungen, in Verwendung befestigt an mindestens einem Paar Vorsprünge (6).

6. Schutzbalg nach einem der Ansprüche 1 bis 3, umfassend mindestens ein Führungselement (8), das an mindestens einem Vorsprung (6) befestigt ist, und zudem umfassend ein äußeres Versteifungselement (7), aufweisend eine Vielzahl an Spitzen und Durchführungen, in Verwendung befestigt an dem vorgenannten mindestens einen Führungselement (8).

7. Schutzbalg nach einem der Ansprüche 4 bis 6, wobei das äußere Versteifungselement (7) ein durchgehender Stoff ist.

8. Schutzbalg nach einem der vorhergehenden Ansprüche, wobei das Halterungselement (5) eine Dicke aufweist, die größer ist als die des Versteifungselements (3).

9. Mechanische Bearbeitungsmaschine, umfassend einen Bearbeitungskopf, der mit einem Laserwerkzeug und einem Schutzbalg (1) nach einem der vorhergehenden Ansprüche ausgestattet ist, assoziiert mit dem Laserwerkzeug.

10. Verfahren zur Herstellung eines Schutzbalgs, umfassend die folgenden Schritte:
- Vorbereiten einer Vielzahl an flexiblen Ringelementen (2), bestehend aus Polymermaterial, aufweisend eine Innenkante (D2I) und eine Außenkante (D2E);
- Verbinden der flexiblen Ringelemente (2) nacheinander entlang einer Ausdehnungsrichtung (X) des Balgs, wobei eins der flexiblen Ringelemente (2A) ein erstes Ende (E1) des Balgs definiert, ein anderes der Ringelemente ein zweites Ende (E2) des Balgs definiert und die verbleibenden flexiblen Ringelemente eine mittige Region (RC) zwischen den Enden (E1, E2) definieren, wobei der Schritt zum nacheinander erfolgenden Verbinden der flexiblen Ringelemente (2) folgende Schritte umfasst:
- Siegeln eines jeden der flexiblen Ringelemente an einem anderen flexiblen Ringelement in einer ersten Siegelregion (R1), die nah an der Innenkante (D2I) angeordnet ist, sodass ein jedes der Ringelemente und ein anderes flexibles Ringelement miteinander nah an deren Innenkanten (D2I) verbunden sind;
- Vorbereiten von mindestens einem Versteifungselement (3), aufweisend eine Innenkante (D3I) und eine Außenkante (D3E);
- Platzieren des mindestens einen Versteifungselements (3) zwischen einem Paar flexibler Ringelemente (2) der mittigen Region (RC) und Siegeln der flexiblen Ringelemente des Paars am Versteifungselement (3) an einer zweiten Siegelregion (R2) in der Nähe deren Außenkanten (D2E);
- Vorbereiten von mindestens einer Membran (4), aufweisend eine Innenkante (D4I) und eine Außenkante (D4E);
- Vorbereiten von mindestens einem Element (5) zur Halterung der Membran (4), aufweisend eine Innenkante (D5I) und eine Außenkante (D5E), versehen mit mindestens einem Vorsprung (6), der in Verwendung eine Befestigungsoberfläche definiert und ausgelegt ist, um in Verwendung jenseits der Außenkanten (D2E) der flexiblen Ringelemente (2) hervorzustehen.
- Platzieren des mindestens einen Halterungselements (5) zwischen einem Paar flexibler Ringelemente (2) der mittigen Region (RC) und Siegeln der flexiblen Ringelemente (2) des Paars am Versteifungselement (5) an einer zweiten Siegelregion (R2) in der Nähe der Außenkanten (D2E) der flexiblen Ringelemente (2);
- Verbinden der Membran (4) mit dem Halterungselement (5).

## Revendications

1. Soufflet de protection (1), comprenant, en combinaison :
- une pluralité d'éléments annulaires flexibles (2), en polymère, comportant un bord intérieur (D2I) et un bord extérieur (D2E) et reliés, en fonctionnement, les uns à la suite des autres le long d'une direction (X) d'extension du soufflet, un des éléments annulaires flexibles (2A) définissant une première extrémité (E1) du soufflet, un autre (2B) des éléments annulaires définissant une seconde extrémité (E2) du soufflet et les éléments annulaires flexibles restants (2') définissant une zone centrale (RC) entre les extrémités (E1, E2), chacun des éléments annulaires flexibles étant scellé à un autre élément annulaire flexible adjacent à celui-ci dans une première zone de scellement (R1) proche du bord intérieur (D2I) de sorte que chacun des éléments annulaires et un autre élément annulaire flexible soient reliés ensemble à proximité de leurs bords intérieurs (D2I),
- au moins un diaphragme (4) comportant un bord intérieur (D4I) et un bord extérieur (D4E),
- au moins un élément de support (5), destiné à supporter le diaphragme (4) comportant un bord intérieur (D5I) et un bord extérieur (D5E), interposé entre une paire d'éléments annulaires flexibles de la zone centrale (RC), le diaphragme (4) étant relié, en fonctionnement, à l'élément de support (5) pour être porté par l'élément de support (5), le soufflet de protection étant **caractérisé en ce qu'**il comprend de plus :
- au moins un élément de renforcement (3), comportant un bord intérieur (D3I) et un bord extérieur (D3E), interposé entre une paire d'éléments annulaires flexibles (2) de la zone centrale (RC) de manière à ce que les éléments annulaires flexibles de la paire soient scellés sur l'élément de renforcement (3) en correspondance d'une seconde zone de scellement (R2) à proximité de leurs bords extérieurs (D2E) ; et **en ce que**
- l'au moins un élément de support (5) est interposé entre la paire d'éléments flexibles de la zone centrale (RC) de sorte que les éléments annulaires flexibles de la paire soient scellés sur l'élément de support en correspondance d'une seconde zone de scellement à proximité de leurs bords extérieurs (D2E), l'élément de support (5) étant doté d'au moins une saillie (6) définissant, en fonctionnement, une surface de fixation et étant configurée pour dépasser, en fonctionnement, au-delà des bords extérieurs (D2E) des éléments annulaires flexibles (2).

2. Soufflet de protection selon la revendication précédente, comprenant un premier diaphragme (4A) et un second diaphragme (4B) reliés au même élément de support (5) sur des côtés opposés de celui-ci par rapport à la direction (X) d'extension du soufflet.

3. Soufflet de protection selon l'une quelconque des revendications précédentes, dans lequel l'élément de support (5) est doté d'une paire de saillies (6) définissant, en fonctionnement, une surface de fixation et configurées pour dépasser, en fonctionnement, au-delà des bords extérieurs (D2E) des éléments annulaires flexibles (2).

4. Soufflet de protection selon l'une quelconque des revendications précédentes, comprenant de plus un élément de renforcement extérieur (7), comportant une pluralité de pointes et de creux, fixé en fonctionnement aux éléments annulaires flexibles (2) en correspondance d'une zone extérieure proche des bords extérieurs (D2E).

5. Soufflet de protection selon l'une quelconque des revendications de 1 à 3, comprenant de plus un élément de renforcement extérieur (7), comportant une pluralité de pointes et de creux, fixé en fonctionnement à au moins une paire de saillies (6).

6. Soufflet de protection selon l'une quelconque des revendications de 1 à 3, comprenant au moins un élément de guidage (8), fixé à l'au moins une saillie (6), et comprenant de plus un élément de renforcement extérieur (7), comportant une pluralité de pointes et de creux, fixé en fonctionnement au susdit au moins un élément de guidage (8).

7. Soufflet de protection selon l'une quelconque des revendications de 4 à 6, dans lequel l'élément de renforcement extérieur (7) est un tissu continu.

8. Soufflet de protection selon l'une quelconque des revendications précédentes, dans lequel l'élément de support (5) possède une épaisseur supérieure à celle de l'élément de renforcement (3).

9. Machine à usiner mécanique, comprenant une tête d'actionnement équipée d'un outil laser et d'un soufflet de protection (1), selon l'une quelconque des revendications précédentes, associé à l'outil laser.

10. Procédé de fabrication d'un soufflet de protection, comprenant les étapes de :
- préparer une pluralité d'éléments annulaires flexibles (2) en polymère comportant un bord intérieur (D2I) et un bord extérieur (D2E),
- relier les uns à la suite des autres le long d'une direction (X) d'extension du soufflet les éléments annulaires flexibles (2), un des éléments annulaires flexibles (2) définissant une première extrémité (E1) du soufflet, un autre des éléments annulaires définissant une seconde extrémité (E2) du soufflet et le reste définissant une zone centrale (RC) entre les extrémités (E1, E2), l'étape consistant à relier les uns à la suite des autres les éléments annulaires flexibles (2) comprenant les étapes de :
- sceller chacun des éléments annulaires à un autre élément annulaire flexible en correspondance d'une première zone de scellement (R1) proche du bord intérieur (D2I) de sorte que chacun des éléments annulaires et un autre élément annulaire flexible soient reliés ensemble à proximité de leurs bords intérieurs (D2I),
- préparer au moins un élément de renforcement (3) comportant un bord intérieur (D3I) et un bord extérieur (D3E),
- placer l'au moins un élément de renforcement (3) entre une paire d'éléments annulaires flexibles (2) de la zone centrale (RC) et sceller les éléments annulaires flexibles de la paire sur l'élément de renforcement (3) en correspondance d'une seconde zone de scellement (R2) à proximité de leurs bords extérieurs (D2E),
- préparer au moins un diaphragme (4) comportant un bord intérieur (D4I) et un bord extérieur (D4E),
- préparer au moins un élément (5) pour supporter le diaphragme (4), comportant un bord intérieur (D5I) et un bord extérieur (D5E), doté d'au moins une saillie (6) définissant, en fonctionnement, une surface de fixation et configurée pour dépasser, en fonctionnement, au-delà des bords extérieurs (D2E) des éléments annulaires flexibles (2),
- placer l'au moins un élément de support (5) entre une paire d'éléments annulaires flexibles (2) de la zone centrale (RC) et sceller les éléments annulaires flexibles (2) de la paire sur l'élément de support (5) en correspondance d'une seconde zone de scellement (R2) à proximité des bords extérieurs (D2E) des éléments annulaires flexibles (2),
- relier le diaphragme (4) à l'élément de support (5).
